# EUROPÄISCHE PATENTSCHRIFT

(11) **EP 1 785 640 B1**
(45) Veröffentlichungstag und Bekanntmachung des Hinweises auf die Patenterteilung: **06.01.2010**
(21) Anmeldenummer: 06022115.7
(22) Anmeldetag: 21.10.2006
(51) Int. Cl.: F16D 23/12

(54) **Kupplungsbetätigungsvorrichtung für ein Doppelkupplungsgetriebe**
Actuating device for a twin clutch gearbox.
Dispositif d'actionnement pour une boîte de vitesses à double embrayage.

(30) Priorität: 11.11.2005 DE 102005053868
(43) Veröffentlichungstag der Anmeldung: 16.05.2007
(73) Patentinhaber: LuK Lamellen und Kupplungsbau Beteiligungs KG, 77815 Bühl (DE)
(72) Erfinder: Metzinger, Manuel, 77815 Bühl (DE); Agner, Ivo, 77815 Bühl (DE); Speck, Andre, 76316 Malsch (DE)

(56) Entgegenhaltungen:
- DE-A1- 10 313 435
- DE-U- 1 873 413

## Beschreibung

Die vorliegende Erfindung betrifft eine Kupplungsbetätigungsvorrichtung für ein Doppelkupplungsgetriebe gemäß dem Oberbegriff des Patentanspruchs 1.

Ein Doppelkupplungsgetriebe eines Kraftfahrzeuges weist in der Regel einen ersten Kupplungsaktor auf, der eine erste Kupplung betätigt und weist einen zweiten Kupplungsaktor auf, der eine zweite Kupplung betätigt. Im Stand der Technik wirken die Kupplungsaktoren auf das jeweilige Ausrücklager der Kupplungen ein, wobei ein herkömmliches Doppelkupplungsgetriebe zwei Eingangswellen aufweist, die unabhängig voneinander durch je eine zugeordnete Kupplung mit dem Motor des Kraftfahrzeuges verbindbar sind. Im Falle von Doppelkupplungsgetrieben, die häufig auch als Parallelschaltgetriebe bezeichnet werden, kommen Trockenkupplungen oder Nasskupplungen zum Einsatz. Die entstehende Wärme durch Reibung zwischen den Anpressplatten bzw. Belägen wird bei Trockenkupplungen über Stahlmassen abgeführt, bei nassen Systemen mit einem speziellen Kühlmedium.

Zur Betätigung der Doppelkupplung eines Doppelkupplungsgetriebes müssen die beiden Kupplungsaktoren auf das jeweilige zugehörige koaxial angeordnete Einrück- bzw. Ausrücklager einwirken. Dabei kann eine bauräumliche Verschachtelung von zwei herkömmlichen Kupplungsausrücksystemen unter den normalerweise vorherrschenden sehr engen Bauraumverhältnissen erhebliche Probleme aufwerfen.

Aus der gattungsgemäßen WO 03/081069 sind Kupplungsausrücksysteme für ein Doppelkupplungsgetriebe eines Kraftfahrzeuges bekannt, die jedoch bei der beispielsweise in den Figuren 21 und 22 gezeigten Ausführungsform den Nachteil aufweisen, dass der dort als Drehgabel 211 oder 215 bezeichnete Drehhebel über eine Steckkupplung 21122 oder 21522 auf einen Zapfen 2150 oder 2110 gesteckt ist. Diese Steckverbindung verbindet eine Drehwelle mit der Drehgabel. Ist eines der beidseits der Steckverbindung angeordneten Bauteile axial nicht exakt ausgerichtet, so kommt es zu Lageabweichungen die außerhalb der erlaubten Bauteiltoleranzen liegen oder zu Verspannungen und im schlimmsten Fall kann die Baueinheit nicht montiert werden.

Solche Nachteile sollen mit der vorliegenden Erfindung beseitigt werden.

Ausgehend von diesem Stand der Technik besteht daher die Aufgabe der vorliegenden Erfindung darin, eine mechanische Kraftübertragungsstrecke zwischen einem Kupplungsaktor und einem Aus- bzw. Einrücklager einer Kupplung eines Doppelkupplungsgetriebes derart zu verbessern, dass Lageabweichungen der beteiligten Bauteile die Montage nicht behindern oder gar verhindern sowie Lageabweichungen durch die erfindungsgemäße Ausbildung der mechanischen Kraftübertragungsstrecke kompensiert werden können.

Diese Aufgabe wird gelöst durch eine eine Kupplungsbetätigungsvorrichtung für ein Doppelkupplungsgetriebe mit den Merkmalen des Patentanspruchs 1.

Demnach weist die erfindungsgemäße Kupplungsbetätigungsvorrichtung für ein Doppelkupplungsgetriebe einen ersten Kupplungsaktor, der eine erste Kupplung betätigt und einen zweiten Kupplungsaktor, der eine zweite Kupplung betätigt, auf, wobei die Kupplungsaktoren auf ein erstes und ein zweites Ausrücklager der zugeordneten Kupplung einwirken, und wobei zwischen den Kupplungsaktoren und den Ausrücklagern jeweils eine mechanische Kraftübertragungsstrecke vorgesehen ist, die einen Drehhebel aufweist, wobei jeder Drehhebel eine ballige Außenverzahnung aufweist, die mit einer innenverzahnten Aufnahmehülse der jeweiligen Kraftübertragungsstrecke in Eingriff steht.

Mit der erfindungsgemäßen Kupplungsbetätigungsvorrichtung für ein Doppelkupplungsgetriebe können zahlreiche Vorteile erreicht werden:
- Drehhebelbetätigung für Doppelkupplung: optimale Verschachtelung zweier Drehhebel in paralleler Anordnung bei Verwendung von Nadellagern.
- Drehhebelbetätigung für Kupplungen mit zentraler Momenteneinleitung über verzahnte Aufnahmehülse.
- Lagerungskonzept in ein- und mehrteiligem Gehäuse.
- Montageeinheit durch Grundblech.
- Nutzen der Bauteilelastizitäten für Wegregelung, 10 - 60% der erforderlichen GesamtElastizität leistet die Drehhebelbetätigung.
- Abstimmung gleichmäßiger Kraftanlage durch Steifigkeiten: der obere Kupplungshebel ist 10 bis 60% weicher als der untere Hebel.
- Drehfeder für Rückstellkraft.
- Fertigungs- und Montagekonzept des Drehhebels: Verbindungen durch Aufpressen.
- Gemeinsamer Flansch für Power-Pack und Steuereinheit mit Zentralstecker.
- Variable Aktoranordnung: Aktorhebel stehen in beliebigem Winkel zu den Kupplungshebeln.

Die erfindungsgemäße Kupplungsbetätigungsvorrichtung erlaubt es, dass die Drehachsen der beiden Drehhebel axial versetzt angeordnet sind, um so eine optimale Bauraumausnutzung realisieren zu können.

Vorzugsweise erfolgt die Momenteneinleitung beim Verdrehen des Drehhebels mittig an der balligen Außenverzahnung des Drehhebels bzw. innenverzahnten Aufnahmehülse.

Vorteilhafterweise ist zudem eine Rückstellfeder vorgesehen, die die Kupplung öffnet, wenn der Kupplungsaktor ausfallen sollte.

Besonders bevorzugt ist jeder Drehhebel zweifach oder dreifach gelagert.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

In den Zeichnungen ist in der:
Figur 1a der prinzipielle Aufbau eines Drehhebels mit den angreifenden Kräften gezeigt;
Figur 1b eine Ausführungsform einer erfindungsgemäßen Kupplungsbetätigungsvorrichtung teilweise dargestellt;
Figur 1c das Verhältnis der unterschiedlichen Hebellängen und Drehhebellängen gezeigt;
Figur 2 eine weitere Ausführungsform der erfindungsgemäßen Kupplungsbetätigungsvorrichtung gezeigt;
Figur 3 eine vergrößerte Darstellung der erfindungsgemäßen balligen Verzahnung am Drehhebel gezeigt;
Figur 4a und 4b die Montagefolge bei der erfindungsgemäßen Kupplungsbetätigungsvorrichtung dargestellt;
Figur 5 das Prinzip der Befestigung der erfindungsgemäßen Kupplungsbetätigungsvorrichtung an einer Kupplungsglocke und an einem Getriebegehäuse gezeigt;
Figur 6 eine weitere Ausführungsform der erfindungsgemäßen Kupplungsbetätigungsvorrichtung gezeigt;
Figur 7 eine weitere vergrößerte Darstellung der erfindungsgemäßen balligen Verzahnung am Drehhebel gezeigt, wobei der Drehhebel dreifach gelagert ist;
Figur 8, 9 und 10 die Montagefolge bei der erfindungsgemäßen Kupplungsbetätigungsvorrichtung nach einer weiteren Ausführungsform dargestellt;
Figur 11 im Querschnitt eine Nasskupplung mit der erfindungsgemäßen Kupplungsbetätigungsvorrichtung im Querschnitt dargestellt;
Figur 12a eine Draufsicht auf die erfindungsgemäße Kupplungsbetätigungsvorrichtung gezeigt und deren bauräumliche Anordnung am Getriebe;
Figur 12b eine perspektivische Ansicht der erfindungsgemäßen Kupplungsbetätigungsvorrichtung dargestellt;
Figur 13 eine weitere Ausführungsform der erfindungsgemäßen Kupplungsbetätigungsvorrichtung mit einer Rückstellfeder dargestellt;
Figur 14 eine Querschnittansicht eines erfindungsgemäßen Drehhebels dargestellt;
Figur 15 eine Prinzipskizze zur Erläuterung der Montage der erfindungsgemäßen Kupplungsbetätigungsvorrichtung; und
Figur 16 eine Prinzipskizze, in der die Einbausituation einer Druckfeder dargestellt ist.

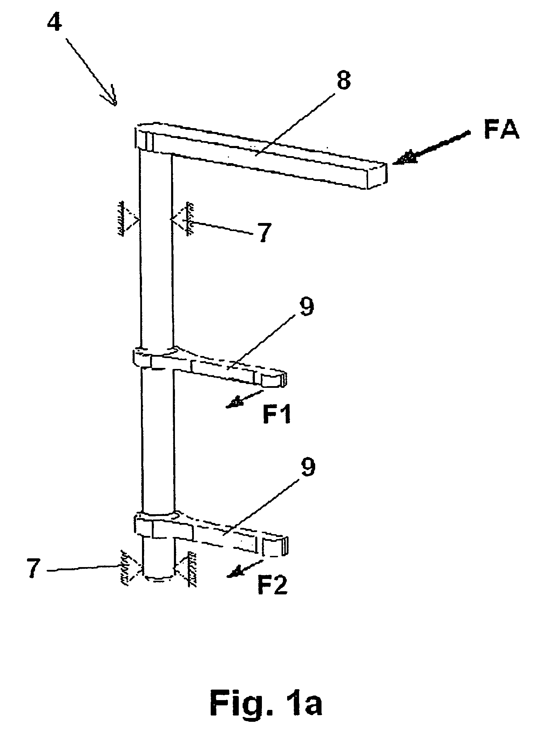

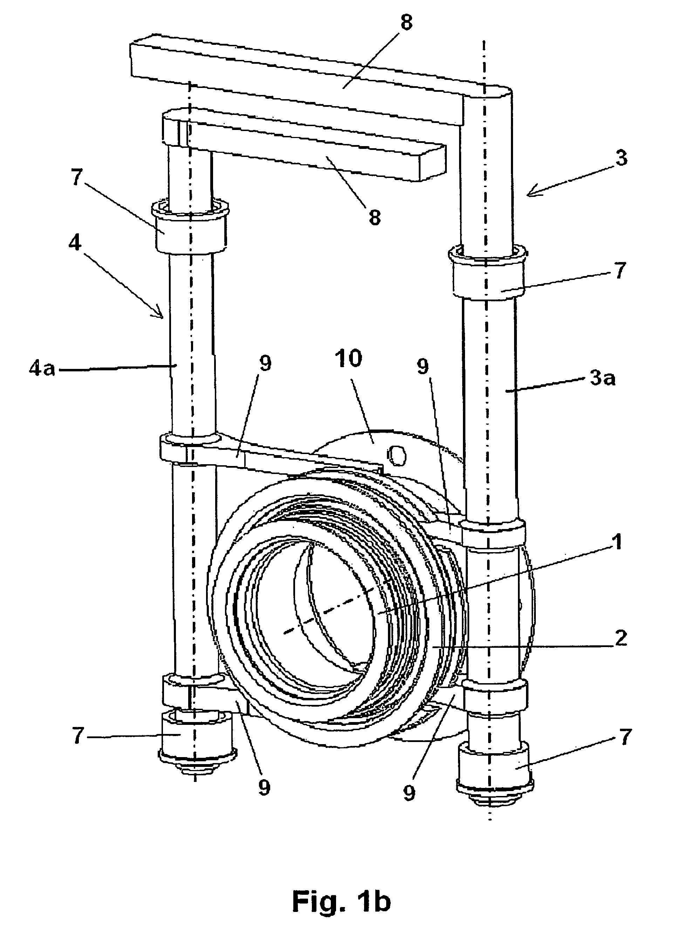

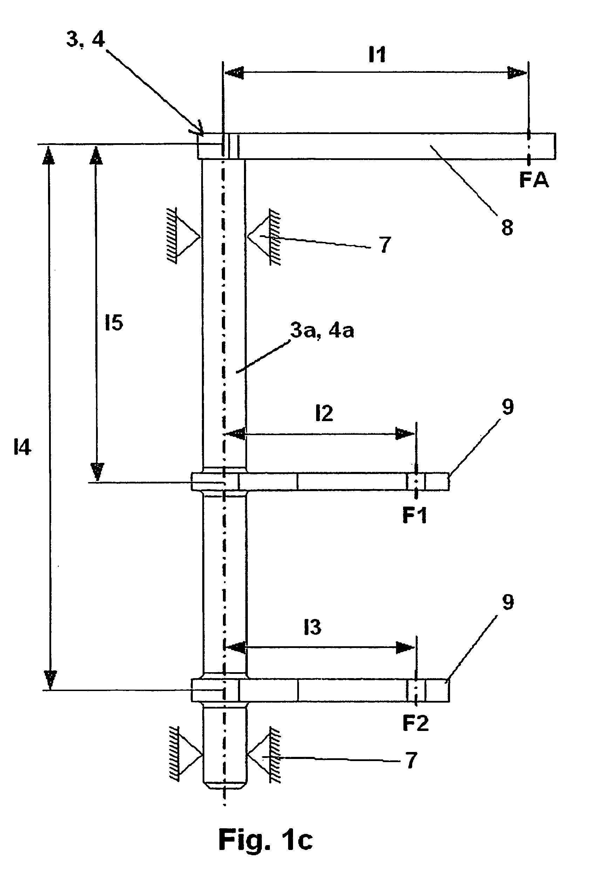

In den Figuren 1a, 1 b und 1c ist der prinzipielle Aufbau einer erfindungsgemäßen Kupplungsbetätigungsvorrichtung dargestellt, wobei in der Figur 1 a der prinzipielle Aufbau eines Drehhebels 4 mit den dort angreifenden Kräften gezeigt ist.

Der in einem Getriebe (nicht dargestellt) gelagerte Drehhebel 4 übersetzt eine Aktorkraft FA über die geometrisch bestimmten Hebelverhältnisse. Zwei Betätigungshebel bzw. untere Hebel 9 drücken an zwei Stellen gleichmäßig auf die Einrück- oder Ausrücklager 1, 2 der jeweiligen Kupplung (nicht dargestellt), um die notwendige Anpresskraft am Kupplungsbelag zu erzeugen. Bei einer Doppelkupplung werden zwei Drehhebel 3 und 4 eingebaut, die voneinander unabhängig arbeiten können. Hierzu ist eine geschickte Verschachtelung und Anordnung der Bauteile in einer Kupplungsglocke notwendig, um ausreichend Betätigungsweg zu gewährleisten. Aus unterschiedlichen Komponenten und Lagerungen lassen sich verschiedene Drehhebelvarianten aufbauen. Der einfache Drehhebel 4 nach der Figur 1a zeigt die Krafteinleitung durch einen Kupplungsaktor am oberen Hebel 8 und die Kraftausgabe F1 und F2 an den unteren Hebeln 9.

Der Drehhebel 3 oder 4 ist dabei an Lagerungen 7 gelagert. Eine einfache Drehhebelvariante entsteht durch den kostengünstigen Teileaufbau bei hohem funktionellem Wert für die Kupplungsbetätigung und die Feinabstimmung. Die aufgepressten oder verschweißten (Betätigungs-) Hebel 8 und 9 eignen sich für eine Serienfertigung. Das Ein- bzw. Ausrücklager 1 der ersten Kupplung wird am Innendurchmesser einer Zentrierhülse geführt, wobei die unteren Hebel 9 über Fenster in die Zentrierhülse eingreifen. Das zweite Ausrücklager 2 wird außerhalb der Zentrierhülse geführt und gedrückt. In der Figur 1b ist gut zu erkennen, dass die beiden Drehhebel 3 und 4 mit ihren zugeordneten Bauteilen oberer Hebel 8 und untere Hebel 9 an Lagerungen 7 jeweils zweifach gelagert sind. Die unteren Hebel 9, die die Kupplung mittels der Ausrücklager 1 und 2 betätigen, werden durch Verdrehen der Drehhebel 3 bzw. 4 verschwenkt.

Die zweifache Lagerung jedes Drehhebels 3 bzw. 4 erfolgt oben im Austritt aus der Kupplungsglocke und unten an der Rückwand zum Getriebe. Dieser Sachverhalt wird weiter unten noch genauer beschrieben.

In der Figur 1c sind die Längenverhältnisse der Bauteile und Hebel in der erfindungsgemäßen Kupplungsbetätigungsvorrichtung dargestellt. Um eine gleichmäßige Krafteinleitung an der Kupplung zu gewährleisten, können die Bauteile bzw. Komponenten unterschiedlich stark ausgelegt werden. Weichere Bauteile mit kurzen Biegelängen können die Kraftdifferenz gegenüber den steifen Komponenten mit größeren Biegelängen ausgleichen. Die durch die unterschiedlichen Hebellängen entstehende Steifigkeitsdifferenz aus Torsion und Durchbiegung wird durch den weicheren Hebel an der ersten Kupplung kompensiert. Das durch die Elastizität bewusst "weiche" System verbessert die Auflösung für eine Wegregelung der Kupplungsbetätigungsvorrichtung.

Nach der Befestigung der Zentrierhülse an der Rückwand der Kupplungsglocke werden die Drehhebel 3 und 4 eingesetzt. Die Drehhebel 3 und 4 sind bereits mit den Hebeln 9 verbunden, z.B. durch Schweißen oder Aufpressen. Beim Einsetzen muss der Drehhebel 3 bzw. 4 durch eine großzügige Öffnung in der Kupplungsglocke eingefädelt werden. Die Größe der Öffnung richtet sich nach Drehhebeldurchmesser und Kippwinkel beim Einfädeln. Die Öffnung wird durch eine Lagerbuchse verschlossen und abgedichtet. Zum Schluss werden die oberen Hebel 8 außerhalb der Kupplungsglocke aufgesteckt und die Betätigungslager auf die Zentrierhülse aufgeschoben.

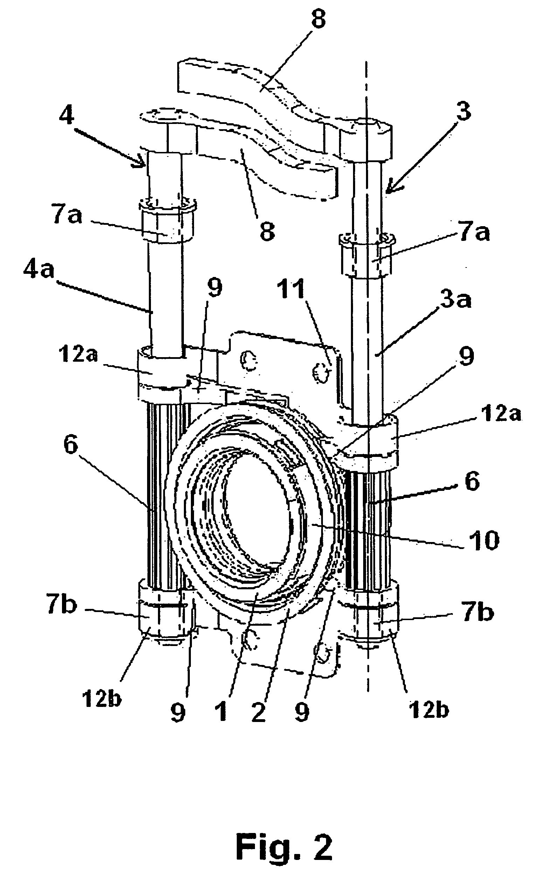

Eine weitere Ausführungsform der erfindungsgemäßen Kupplungsbetätigungsvorrichtung ist in der Figur 2 dargestellt. Um zwei von einander unabhängige Ein- bzw. Ausrücksysteme für das Doppelkupplungsgetriebe zu realisieren, sind nur die Zentrierhülse 10 und das Grundblech 11 gemeinsam genutzte Bauteile. Zwei Betätigungshebel bzw. untere Hebel 9 je System sollen gleichmäßige Kraftanlage an den Ausrücklagern 1 bzw. 2 gewährleisten, so dass kein Schiefabhub in der Kupplung entsteht. Die Aufnahmehülse 6 nimmt über eine innenliegende Verzahnung das Moment mittig auf und drückt die Hebel 9 symmetrisch an die Einrücklager 1 und 2. Das Einrücklager 1 der ersten Kupplung wird am Innendurchmesser der Zentrierhülse 10 geführt, wobei die Hebel 9 über Fenster in die Zentrierhülse 10 eingreifen. Das zweite Ausrücklager 2 wird außerhalb der Zentrierhülse 10 geführt und gedrückt. In den Laschen 12b des Grundblechs 11 gelagert und in den Laschen 12a gegen Verkippen gesichert, sind beide Ein- bzw. Ausrücksysteme als vormontierte Einheit realisierbar.

Die Betätigungskraft, die von den Kupplungsaktoren (nicht dargestellt) erzeugt wird, wird an den oberen Hebeln 8 in die Drehhebel 3 oder 4 eingeleitet. Die Drehhebel 3 und 4 sind an Lagerungen 7a und 7b gelagert und können sich verdrehen. Die unteren Hebel 9 drücken bei einem Verdrehen des Drehhebels 3, 4 auf das zugeordnete Ausrücklager 1, 2 der jeweiligen Kupplung. Beide Drehhebel 3 und 4 sind in Laschen 12a des Grundblechs 11 vormontiert, während die Lasche 12b die Aufnahme für das Lager bildet.

Jede Lagerung 7 weist eine Dichtlippe (nicht dargestellt) auf, um eine Abdichtung der Kupplungsglocke bzw. des Getriebegehäuses zu gewährleisten.

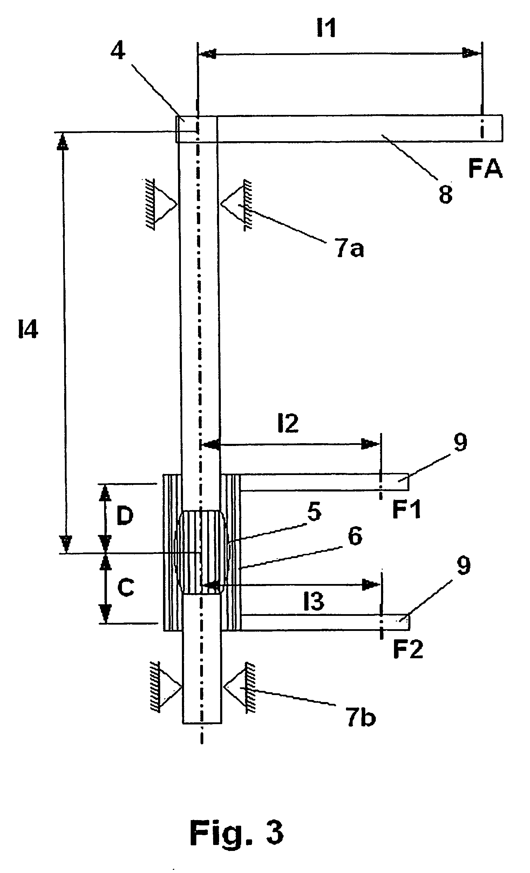

In der Figur 3 ist eine vergrößerte Darstellung einer erfindungsgemäßen balligen Verzahnung 5 am Drehhebel 4 gezeigt. Diese Verzahnung liegt selbstverständlich auch beim Drehhebel 3 vor. In der Beschreibung der vorliegenden Erfindung ist davon auszugehen, dass die beiden Drehhebel 3 und 4 den identischen Aufbau aufweisen. Durch die zentrale (C = D) Momenteneinleitung an der balligen Verzahnung 5 gelingt bei diesem System eine gleichmäßige Anlage an den Ausrücklagern, weil die Torsionslängen und damit auch die Summe der Durchbiegung zu den einzelnen Betätigungshebeln bzw. unteren Hebeln 9 identisch sind. Bei FA wird die Aktorkraft vom Kupplungsaktor in den oberen Hebel 8 eingeleitet, dieser verdreht den Hebel 4 in der Lagerung 7, und die unteren Hebel 9 werden in Übereinstimmung mit dem Verdrehwinkel des oberen Hebels 8 entsprechend weit mit gedreht. An den unteren Hebeln 9 werden die Kräfte F1 und F2 an die zugeordnete Kupplung über das Ausrücklager ausgeleitet. Die Steifigkeit des Drehhebels 3 oder 4 hat somit keine differierende Auswirkung auf die Krafteinleitung in die Kupplung.

Die ballige Verzahnung 5 greift in eine innenliegende Verzahnung einer Aufnahmehülse 6 ein.

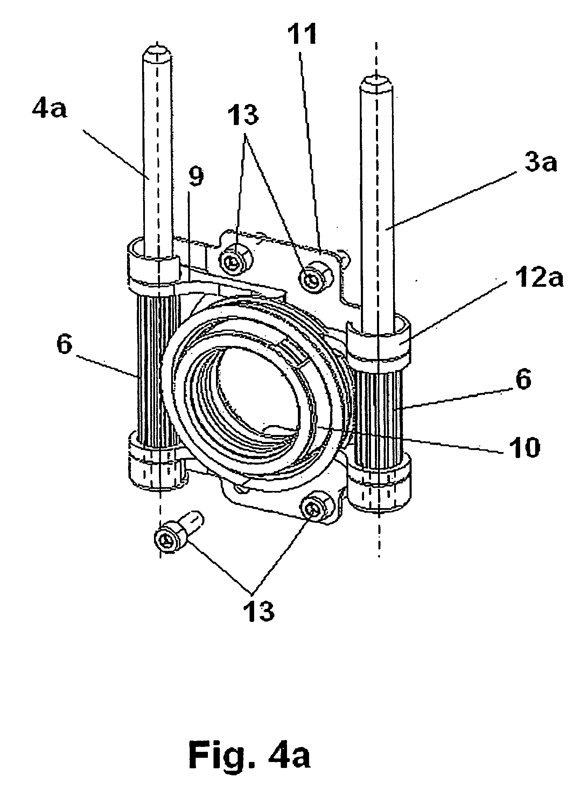

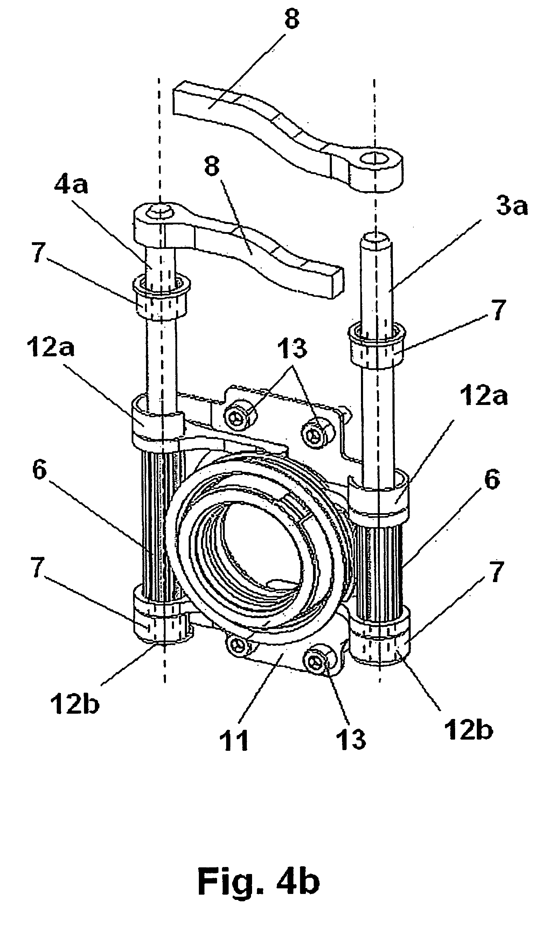

In den Figuren 4a und 4b ist eine Montagefolge für eine erfindungsgemäße Kupplungsbetätigungsvorrichtung dargestellt. Eine weitgehend vormontierte Einheit, wie in der Fig. 4a gezeigt, wird bei dieser Drehhebelvariante in die Kupplungsglockenrückwand verschraubt. Die Verschraubung erfolgt mit den Schrauben 13. Um die Drehhebel 3 und 4 in die Lagerstellen der Kupplungsglocke einzufädeln, wird die vormontierte Einheit schräg über die nicht dargestellten Getriebewellen geschoben und erst dann an der Rückwand der Kupplungsglocke vertikal ausgerichtet. Eine Lasche 12a des Grundblechs 11 zentriert die Drehhebel 3 und 4 jeweils vor, wodurch die Montage erleichtert wird. Außerhalb der Kupplungsglocke werden nun die Lager, die Dichtungen und der Aktorhebel bzw. obere Hebel 8 montiert. Die Hebel 8 werden von oben auf die oberen Enden der Drehhebel 3 bzw. 4 aufgepresst. Die Aktorik zur Betätigung der Kupplungen kann anschließend mit den Hebeln 8 verbunden werden.

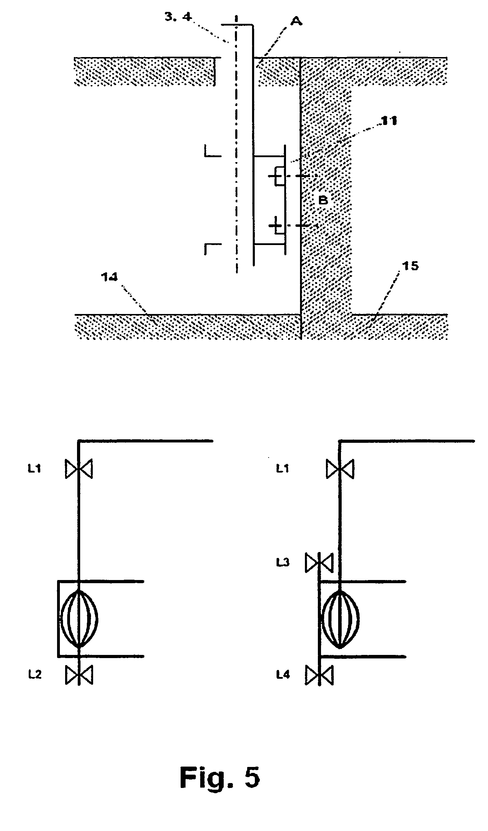

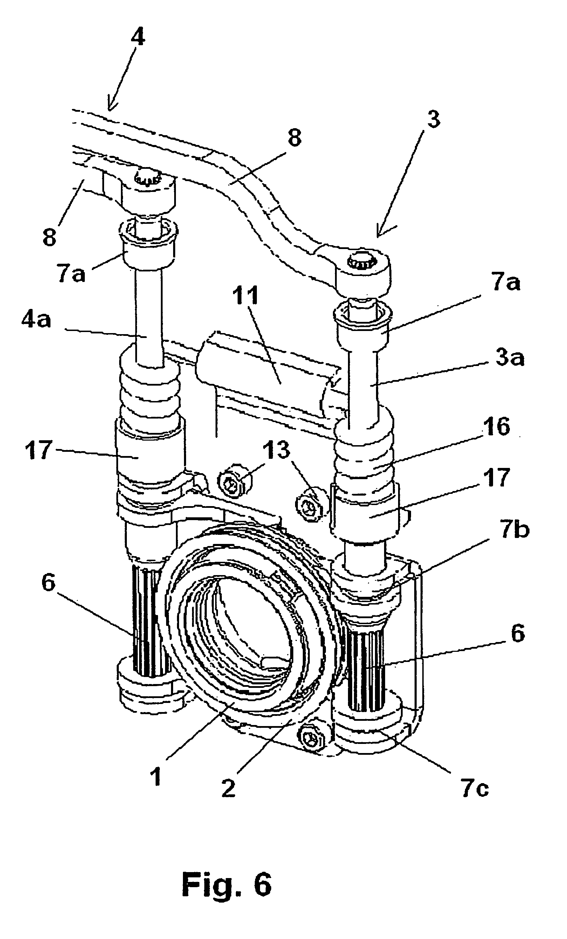

Eine weitere Ausführungsform der vorliegenden Erfindung ist in der Figur 6 dargestellt. Dort ist in, aus einem Grundblech 11, herausgebogenen Laschen die zweifache Lagerung 7b und 7c für einen Drehhebel 3 und 4 über die Aufnahmehülse 6 vorgesehen, sowie eine weitere, dritte Lagerung 7a im oberen Bereich des Drehhebels 3, 4 oder Drehstabs vorgesehen ist. Somit ist jeder Drehhebel 3, 4 dreifach gelagert. In der Aufnahmehülse 6 mit der innenliegenden Verzahnung greift die ballige außenliegende Verzahnung 5 des Drehstabs 3a, 4a ein. Ein geringer Versatz zwischen der Aufnahmehülse 6 und dem Drehstab 3a, 4a lässt sich durch die ballige Verzahnung 5 ausgleichen und kompensieren. Das Grundblech 11 ist dabei beispielsweise an einem Getriebegehäuse 15 befestigt, während die obere Lagerung 7 an einer Kupplungsglocke 14 montiert ist (siehe Figur 5). Durch die ballige Verzahnung 5 lassen sich Toleranzen zwischen der Kupplungsglocke 14 und dem Getriebegehäuse 15 überbrücken, ohne die Funktionalität der erfindungsgemäßen Kupplungsbetätigungsvorrichtung zu beeinträchtigen.

Das Grundblech 11 ist über die Schrauben 13 befestigt. Eine Rückstellfeder 16 ist bei dieser Ausführungsform optional einsetzbar, die dann die Rückstellung der Drehhebel 3 und 4 bewirkt. Die Rückstellfeder 16 stützt sich an dem Grundblech 11 ab und beaufschlägt den Drehhebel 3 und 4 jeweils mit einer Rückdrehkraft, entgegen der Wirkung eines Kupplungsaktors (nicht dargestellt).

Ansonsten ist der Aufbau der und funktioniert die in der Figur 6 gezeigt Ausführungsform wie die weiter oben bereits beschriebenen Ausführungsformen.

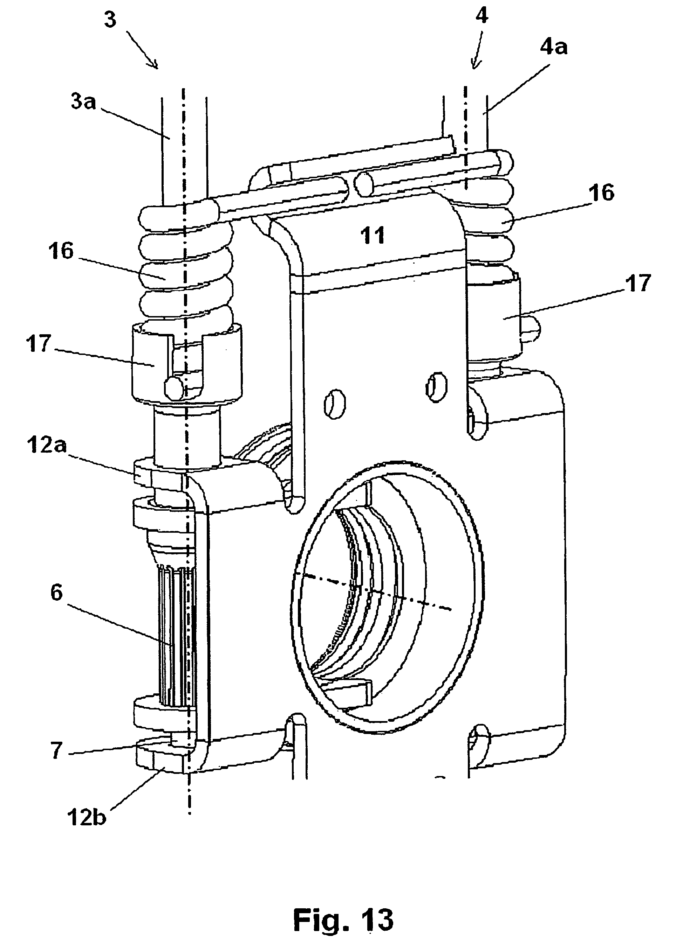

In der Figur 13 ist eine weitere Ausführungsform der erfindungsgemäßen Kupplungsbetätigungsvorrichtung mit einer Rückstellfeder dargestellt. Bei elektromechanischer Kupplungsaktorik und nicht selbsthemmendem Axialtrieb muss die Kupplung bei Ausfall der Elektronik öffnen können. Wenn die Kupplung nicht genügend Rückstellkraft erzeugt, kann dies mit einer Drehfeder bzw. Rückstellfeder 16 am Drehhebel 3 bzw. 4 oder einer Druckfeder am Aktorhebel oder oberen Hebel 8 unterstützt werden. In der abgebildeten Ausführungsform wird die Rückstellfeder 16 in einer Hülse 17 vorzentriert und eingehängt. Die Kraft erhält die Rückstellfeder 16 durch das Vorspannen hinter einen Blecharm oder hinter einen Rücksprung im Getriebegehäuse. Dieses Rückstellprinzip eignet sich für alle bisher vorgestellten Drehhebelvarianten bzw. Ausführungsformen.

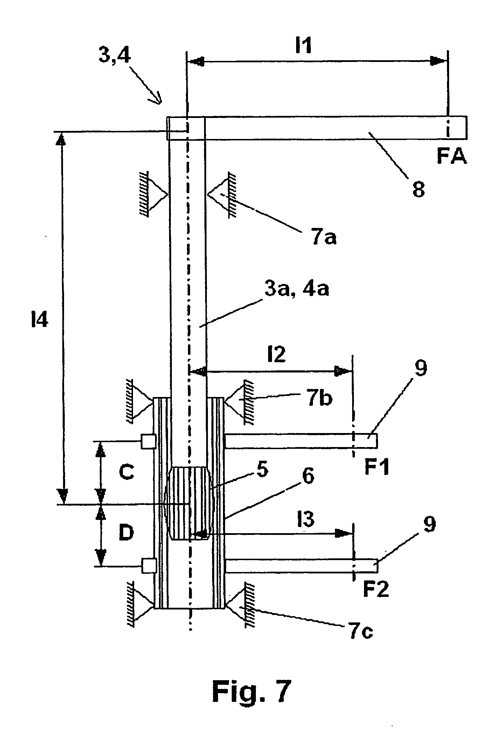

In der Figur 7 ist eine weitere heraus gelöste Darstellung der erfindungsgemäßen balligen Verzahnung 5 am Drehhebel 3 bzw. 4 gezeigt, wobei der Drehhebel 3, 4 dreifach gelagert ist. Die Lagerungen 7 sind wie in der Figur 6 gezeigt, angeordnet. Durch die zentrale Momenteneinleitung (C = D) an der balligen Verzahnung 5 gelingt bei diesem System eine gleichmäßige Anlage an den Ausrücklagern 1 oder 2, weil die Torsionslängen und damit auch die Summe der Durchbiegung, zu den einzelnen Betätigungshebeln bzw. unteren Hebeln 9 identisch sind. Die Steifigkeit des Drehhebels 3 oder 4 hat somit keine differierende Auswirkung auf die Krafteinleitung in die Kupplung.

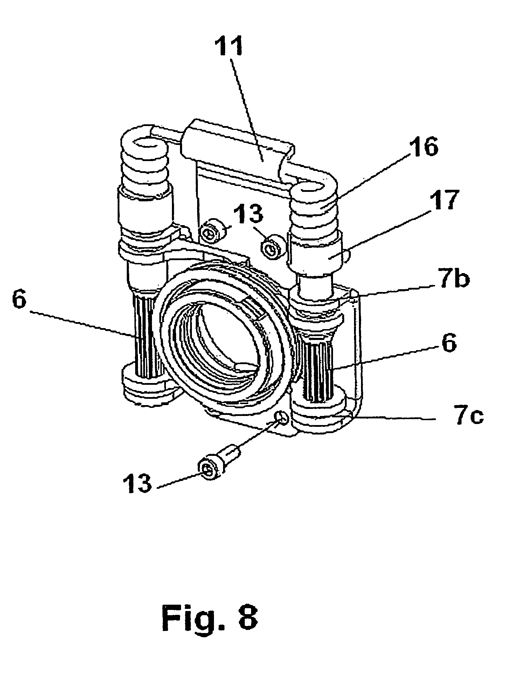

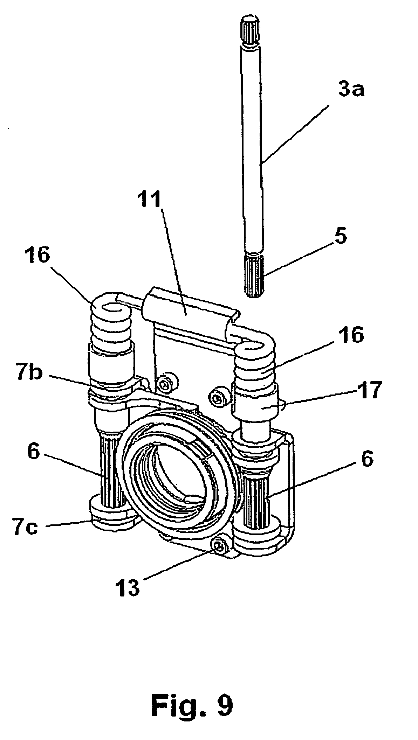

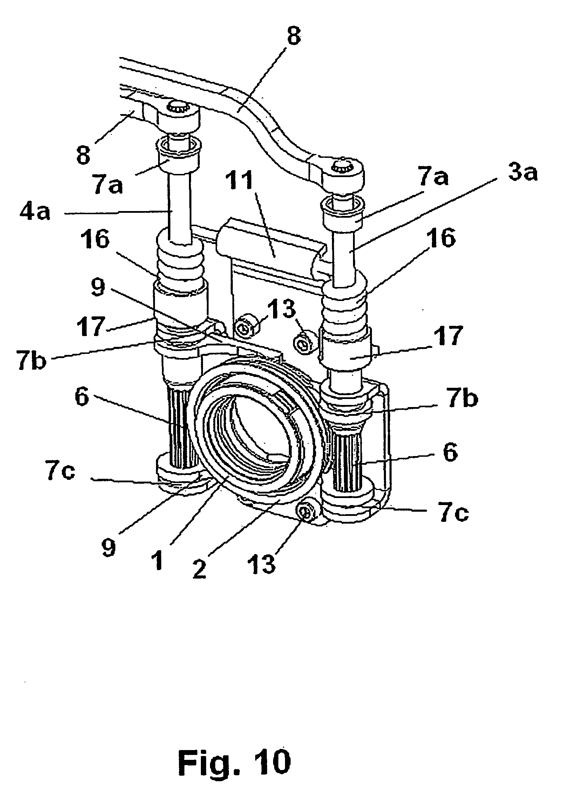

In den Figuren 8, 9 und 10 ist die Montagefolge bei einer erfindungsgemäßen Kupplungsbetätigungsvorrichtung dargestellt. Bei dieser Ausführungsform gelingt es, die erste Montageeinheit bestehend aus Grundblech 11 mit Aufnahmehülsen 6, untere Hebel 9, Ausrücklager 1 und 2, etc. ins Getriebe (nicht dargestellt) zu montieren (siehe Figur 8), um den Drehstab 3a und 4a später von außen durch eine Öffnung eines anderen Getriebebauteils einzuführen (siehe Figur 9). Zum Schluss werden Dicht- und Lagerbuchse und Aktorhebel bzw. oberer Hebel 8 montiert (Bild 10). In der Figur 9 ist dargestellt das Einstecken des Drehstabs 3a durch die Glockenwand in die verzahnte Aufnahmehülse 6. In der Figur 10 ist dargestellt wie die Lagerbuchse der Lagerung 7 mit einer Dichtung und der Aktorhebel bzw. obere Hebel 8 aufgesteckt werden.

Der Aufbau der erfindungsgemäßen Kupplungsbetätigungsvorrichtung nach den Figuren 8 bis 10 entspricht im wesentlichen den oben bereits erläuterten Ausführungsformen, so dass auf diese Bezug genommen wird. Gleiche Bezugszeichen verweisen auf gleiche und/oder gleich wirkende Bauteile. Auch bei dieser Ausführungsform ist das Grundblech 11 über die Schrauben 13 befestigt. Eine Rückstellfeder 16 ist bei dieser Ausführungsform eingesetzt und in einer Federhülse 17 geführt, wobei die Rückstellfeder 16 dann die Rückstellung der Drehhebel 3 und 4 bewirkt. An dem Grundblech 11 ist unten auch eine zweifache Lagerung 7 für die Drehhebel 3 und 4 vorgesehen sowie eine weitere, dritte Lagerung 7 im oberen Bereich des Drehhebels 3, 4 vorgesehen ist. Damit ist jeder Drehhebel 3 und 4 dreifach gelagert. In der Aufnahmehülse 6 mit der innenliegenden Verzahnung greift wiederum die ballige und außenliegende Verzahnung 5 des Drehhebels 3, 4 ein. Ein geringer Versatz zwischen der Aufnahmehülse 6 und dem jeweiligen Drehhebel 3 oder 4 lässt sich durch die ballige Verzahnung 5 ausgleichen und kompensieren. Das Grundblech 11 ist zum Beispiel an einem Getriebegehäuse 15 befestigt, während die obere Lagerung 7 an einer Kupplungsglocke 14 montiert ist. Durch die ballige Verzahnung 5 lassen sich Toleranzen zwischen der Kupplungsglocke 14 und dem Getriebegehäuse 15 überbrücken, ohne die Funktionalität der erfindungsgemäßen Kupplungsbetätigungsvorrichtung nach der vorliegenden Ausführungsform zu beeinträchtigen.

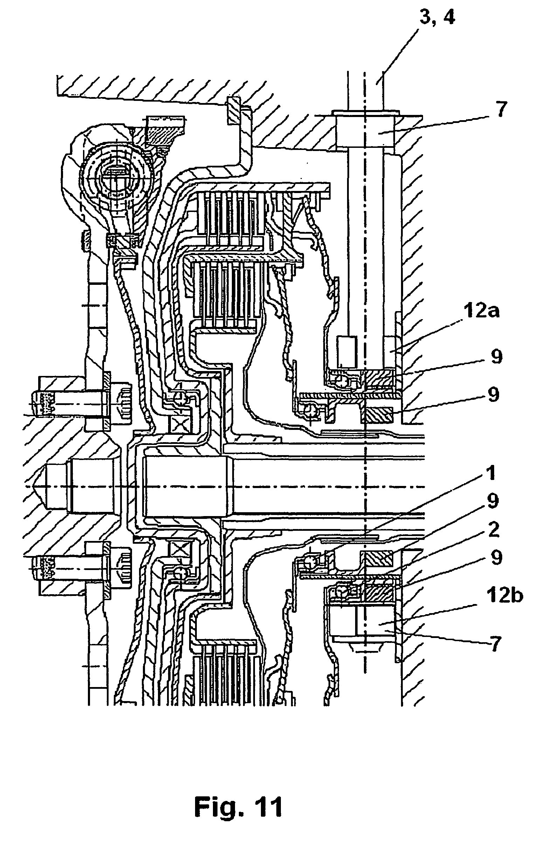

In der Figur 11 ist im Querschnitt eine Nasskupplung mit der erfindungsgemäßen Kupplungsbetätigungsvorrichtung dargestellt. Der erfindungsgemäße Drehhebel 3 bzw. 4 ist in Lagerungen 7 gelagert und dient der Betätigung der Ausrücklager der Kupplungen. Die bekannte Nasskupplung wird an dieser Stelle nicht im Detail beschrieben. Durch Verdrehen des Drehhebels 3 bzw. 4 mittels einer Kupplungsaktorik (nicht dargestellt) werden die unteren Hebel 9 verschwenkt und drücken auf die Ausrücklager der zugeordneten ersten oder zweiten Kupplung.

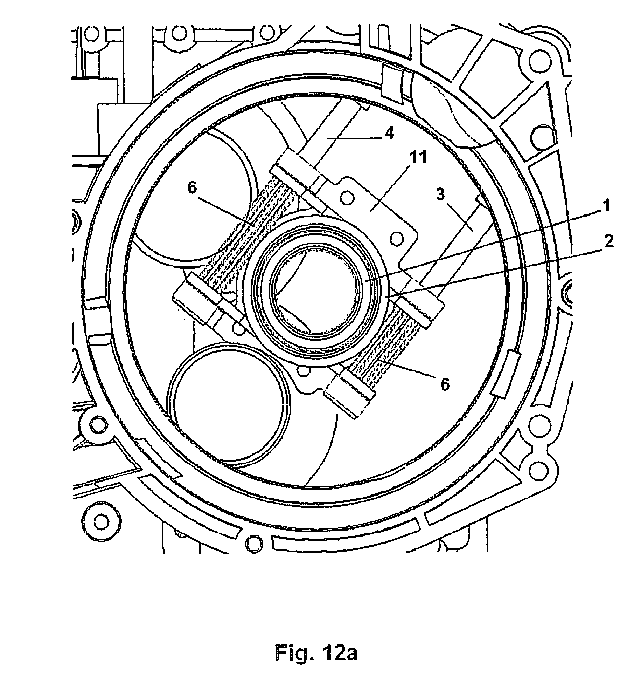

In der Figur 12a ist eine perspektivische Ansicht der erfindungsgemäßen Kupplungsbetätigungsvorrichtung an einer Kupplung bzw. an einem Getriebe dargestellt. Die Drehhebel 3 und 4 arbeiten am besten parallel nebeneinander, so dass es keine Überschneidung im Schwenkbereich der Hebel 3 und 4 gibt. In der Kupplungsglocke ist der axiale (bezüglich Kurbelwelle) Bauraum sehr knapp. Das erfindungsgemäße Drehhebelsystem baut hier sehr kurz und es gelingt dieses radial zwischen die Lagerbutzen und anderen Bauteilen anzuordnen.

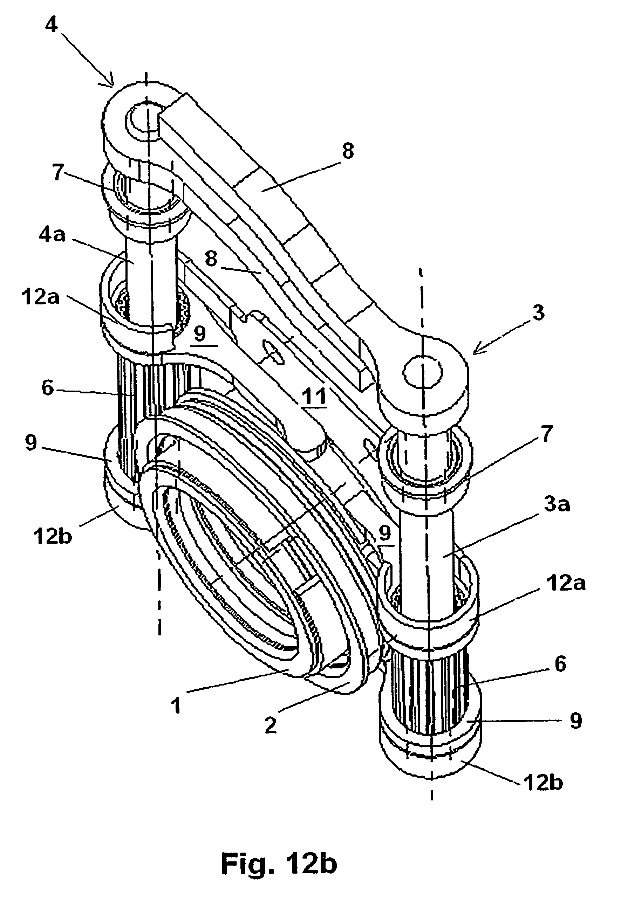

In der Figur 12b ist eine weitere Ausführungsform der erfindungsgemäßen Kupplungsbetätigungsvorrichtung dargestellt. Die Verschachtelung der Drehhebel 3 und 4 hinter dem Ausrücklager ist gezeigt. Bei radial kritischen Bauräumen können die Drehachsen der zwei Systeme axial (zur Kurbelwelle) versetzt werden. Hierdurch werden Aufnahmehülsen 6 und Einrücklager 1 und 2 optimal verschachtelt. Bezüglich der Beschreibung wird auf die vorhergehenden Ausführungsformen verwiesen. Auch hier sind gleiche bzw. gleich wirkende Bauteile mit gleichen Bezugszeichen versehen.

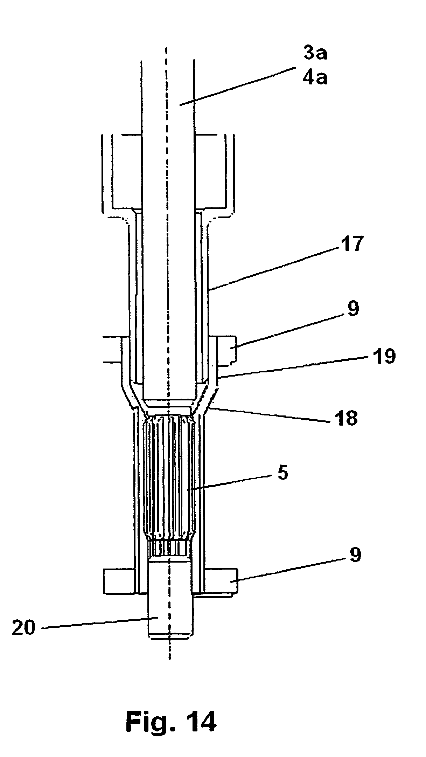

In der Figur 14 ist schließlich eine Querschnittansicht eines erfindungsgemäßen Drehhebels 3 bzw. 4 dargestellt. Ein Fertigungskonzept für einen solchen Drehhebel 3, 4 sieht vor, dass sich über eine zentrale Aufnahmehülse 19 alle Bauteile aufnehmen lassen. Die Federhülse 17 und der Lagerstift 20 werden in die Aufnahmehülse 19 eingepresst, wobei über einen Konus 18 die erforderliche Gegenkraft aufgebracht werden kann. Anschließend werden die Betätigungshebel 9 außen aufgepresst. Am Innendurchmesser der Verzahnung 5 wirken Zentrierhülse und Lagerstift 20 gegen die Aufpresskraft. Die Aufnahmehülse 19 wird durch diese Fertigungsvariante nicht verformt bzw. unförmig und die Pressverbindung wird gestärkt. Zusätzlich sorgen kleine Kerben in den Kontaktstellen für mehr Sicherheit gegen Verdrehen.

In der Figur 13 ist eine perspektivische Ansicht dargestellt.

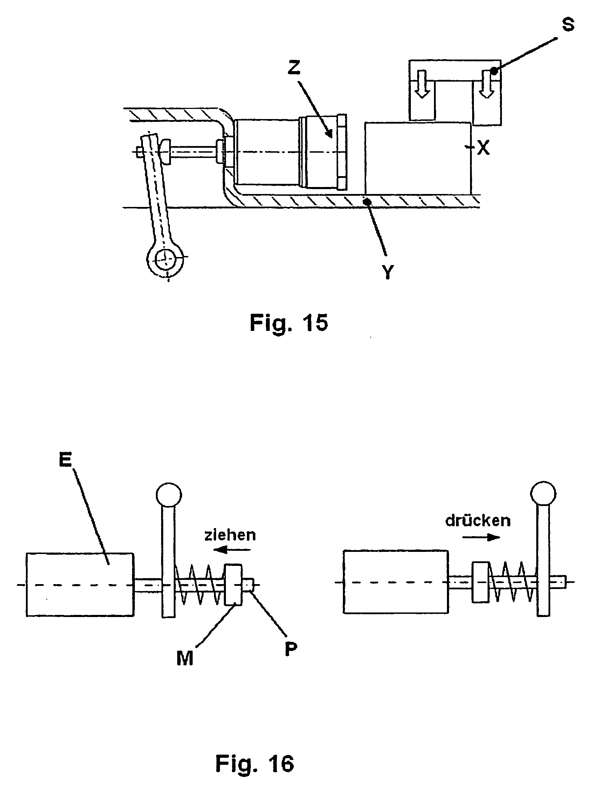

Für die Aktorik (elektronisch, elektrohydraulisch oder ähnliches) ist ein selbsthemmender oder nicht selbsthemmender Axialtrieb vorzusehen. Ob der Drehhebel 3 bzw. 4 durch "Ziehen" oder "Drücken" des Aktorhebels betätigt wird, kann durch deren Anordnung festgelegt werden, wobei beide Varianten technisch machbar sind. Um die Wärme von den Elektromotoren abzuführen, werden diese über eine größtmögliche Kontaktstelle (Z) auf einem Flansch oder dem Getriebegehäuse 15 befestigt. Zur Erläuterung dient die Figur 15. Um die Gesamtmontage zu vereinfachen, kann hierfür ein gemeinsamer Flansch (Y) verwendet werden, worauf in Form eines mechanischen Powerpacks zusätzlich noch die Getriebeaktorik (X) fixiert werden kann. Hierdurch ist eine kompakte elektrische Steuereinheit mit einem Zentralstecker (S) zu einem Bordnetz des Kraftfahrzeuges möglich. Wird auf eine gemeinsame Anbindung verzichtet, kann auf unterschiedliche Bauraumbedingungen variabel reagiert werden. Die Aktoren lassen sich für die Drehhebelbetätigung in jede Winkellage positionieren. Zum Beispiel können die Motoren gegenüber angeordnet sein.

Die Gesamtelastizität der Bauteile der mechanischen Übertragungsstrecke setzt sich aus den Steifigkeiten der Kupplungs- und Drehhebelkomponenten zusammen. Um die notwendige Auflösung für Wegregelung, insbesondere bei harten Nasskupplungen, am Elektromotor zu erreichen, werden die Bauteile der Drehhebelaktuatorik bewusst weich gestaltet. Die Biegung aus den Hebeln und die Torsion aus dem Drehstab gehen hier mit ein. Müsste man die Elastizität komplett in der Kupplung realisieren, bräuchte man hierfür deutlich mehr axialen Bauraum. Eine Zusatzfeder am Axialtrieb erzeugt weitere Elastizität. Das Beispiel nach der Figur 16 zeigt die Einbausituation bei der Anwendung einer Druckfeder beim Ziehen und Drücken anhand einer Prinzipskizze.

Kurz zusammengefasst, schafft die vorliegende Erfindung eine Kupplungsbetätigungsvorrichtung für ein Doppelkupplungsgetriebe, mit einem ersten Kupplungsaktor, der eine erste Kupplung betätigt und mit einem zweiten Kupplungsaktor, der eine zweite Kupplung betätigt, wobei die Kupplungsaktoren auf ein erstes und ein zweites Ausrücklager 1, 2 der jeweils zugeordneten Kupplung einwirken, und wobei zwischen den Kupplungsaktoren und den Ausrücklagern 1, 2 jeweils eine mechanische Kraftübertragungsstrecke vorgesehen ist, die einen Drehhebel 3, 4 aufweist, wobei jeder Drehhebel 3, 4 eine ballige Außenverzahnung 5 aufweist, die mit einer innenverzahnten Aufnahmehülse 6 der jeweiligen Kraftübertragungsstrecke in Eingriff steht.

Hinsichtlich vorstehend im Einzelnen nicht näher erläuterter Merkmale der Erfindung wird im Übrigen ausdrücklich auf die Ansprüche und die Zeichnungen verwiesen.

**Bezugszeichenliste**

| | | | |
|---|---|---|---|
| 1 | Ausrücklager, erstes | | |
| 2 | Ausrücklager, zweites | | |
| 3 | Drehhebel, erster | 4 | Drehhebel, zweiter |
| 3a | Drehstab, erster | 4a | Drehstab, zweiter |
| 5 | Außenverzahnung | | |
| 6 | Aufnahmehülse | | |
| 7 | Lagerung | | |
| 8 | oberer Hebel | | |
| 9 | unterer Hebel | | |
| 10 | Zentrierhülse | | |
| 11 | Grundblech | | |
| 12a | Lasche oben | 12b | Lasche unten |
| 13 | Schraube | | |
| 14 | Kupplungsglocke | | |
| 15 | Getriebegehäuse | | |
| 16 | Rückstellfeder | | |
| 17 | Federhülse | | |
| 18 | Konus | | |
| 19 | Aufnahmehülse | | |
| 20 | Lagerstift | | |
| A | Austritt Kupplungsglocke | | |
| B | Wandung zwischen Kupplungsglocke u. Getriebegehäuse | | |
| C, D | Abstand | | |
| E | E-Motor | | |
| FA | Aktorkraft | | |
| F1 | Kraft 1, Kupplung | F2 | Kraft 2, Kupplung |
| I1, I2, I3 | Hebellänge | | |
| I4, I5 | Drehhebellänge | | |
| M | Mutter | | |
| P | Spindel | | |
| S | Zentralstecker | | |
| X | Getriebeaktorik | | |
| Y | Flansch | | |
| Z | Kontaktstelle | | |

## Patentansprüche

1. Kupplungsbetätigungsvorrichtung für ein Doppelkupplungsgetriebe, mit einem ersten Kupplungsaktor, der eine erste Kupplung betätigt und mit einem zweiten Kupplungsaktor, der eine zweite Kupplung betätigt, wobei die Kupplungsaktoren auf ein erstes und ein zweites Ausrücklager (1, 2) der zugeordneten Kupplung einwirken, und wobei zwischen den Kupplungsaktoren und den Ausrücklagern (1, 2) jeweils eine mechanische Kraftübertragungsstrecke vorgesehen ist, die einen Drehhebel (3, 4) aufweist, **dadurch gekennzeichnet, dass** jeder Drehhebel (3, 4) eine ballige Außenverzahnung (5) aufweist, die mit einer innenverzahnten Aufnahmehülse (6) der jeweiligen Kraftübertragungsstrecke in Eingriff steht.

2. Kupplungsbetätigungsvorrichtung für ein Doppelkupplungsgetriebe nach Anspruch 1, **dadurch gekennzeichnet, dass** eine Momenteneinleitung beim Verdrehen des Drehhebels (3, 4) mittig an der Außenverzahnung (5) bzw. innenverzahnten Aufnahmehülse (6) erfolgt.

3. Kupplungsbetätigungsvorrichtung für ein Doppelkupplungsgetriebe nach Anspruch 1 oder 2, **dadurch gekennzeichnet, dass** ein Grundblech (11) vorgesehen ist, an welchem Teile der mechanischen Übertragungsstrecke vormontiert sind.

4. Kupplungsbetätigungsvorrichtung für ein Doppelkupplungsgetriebe nach einem der Ansprüche 1 bis 3, **dadurch gekennzeichnet, dass** die beiden Aufnahmehülsen (6) an einem gemeinsamen Grundblech (11) montiert bzw. gelagert sind.

5. Kupplungsbetätigungsvorrichtung für ein Doppelkupplungsgetriebe nach Anspruch 3 oder 4, **dadurch gekennzeichnet, dass** das Grundblech (11) an einer Rückwand einer Kupplungsglocke (14) montiert wird.

6. Kupplungsbetätigungsvorrichtung für ein Doppelkupplungsgetriebe nach Anspruch 3 oder 4, **dadurch gekennzeichnet, dass** das Grundblech (11) an einem Getriebegehäuse (15) montiert wird oder dass das Grundblech (11) an einer Wand zwischen Kupplungsglocke (14) und Getriebegehäuse (15) montiert wird.

7. Kupplungsbetätigungsvorrichtung für ein Doppelkupplungsgetriebe nach einem der Ansprüche 3 bis 6, **dadurch gekennzeichnet, dass** an dem Grundblech (11) eine Rückstellfeder (16) für jeden Drehhebel (3, 4) vorgesehen ist.

8. Kupplungsbetätigungsvorrichtung für ein Doppelkupplungsgetriebe nach Anspruch 7, **dadurch gekennzeichnet, dass** die Rückstellfeder (16) die Kupplung öffnet, wenn der Kupplungsaktor ausfällt.

9. Kupplungsbetätigungsvorrichtung für ein Doppelkupplungsgetriebe nach einem der Ansprüche 1 bis 8, **dadurch gekennzeichnet, dass** der Drehhebel (3, 4) in die Aufnahmehülse (6) eingesteckt ist und dass untere Hebel (9) zur Betätigung der Ausrücklager (1, 2) außen auf die Aufnahmehülse (6) aufgepresst sind.

10. Kupplungsbetätigungsvorrichtung für ein Doppelkupplungsgetriebe nach Anspruch 9, **dadurch gekennzeichnet, dass** zwei Hebel (9) pro Ausrücklager (1, 2) vorgesehen sind.

11. Kupplungsbetätigungsvorrichtung für ein Doppelkupplungsgetriebe nach Anspruch 10, **dadurch gekennzeichnet, dass** die beiden Hebel (9) axial am Drehhebel im gleichen Abstand relativ zur Mitte der balligen Außenverzahnung (5) des Drehhebels (3 ,4) angeordnet sind.

12. Kupplungsbetätigungsvorrichtung für ein Doppelkupplungsgetriebe nach einem der Ansprüche 1 bis 11, **dadurch gekennzeichnet, dass** jeder Drehhebel (3, 4) zweifach oder dreifach gelagert ist.

13. Kupplungsbetätigungsvorrichtung für ein Doppelkupplurtgsgetriebe nach Anspruch 12, **dadurch gekennzeichnet, dass** zumindest jeweils eine Lagerung (7) beidseits der balligen Außenverzahnung (5) am Drehhebel (3, 4) in axialer Richtung am Drehhebel vorgesehen ist.

14. Kupplungsbetätigungsvorrichtung für ein Doppelkupplungsgetriebe nach Anspruch 12, **dadurch gekennzeichnet, dass** die Lagerungen (7) des Drehhebels (3, 4) in unterschiedlichen Bauteilen vorgesehen ist.

15. Kupplungsbetätigungsvorrichtung für ein Doppelkupplungsgetriebe nach Anspruch 14, **dadurch gekennzeichnet, dass** der obere Hebel (8) in einem Getriebegehäuse (15) und der untere Hebel (9) in einer Wandung (B) gelagert sind.

16. Kupplungsbetätigungsvorrichtung für ein Doppelkupplungsgetriebe nach Anspruch 14 oder 15, **dadurch gekennzeichnet, dass** sich die Aufnahmehülse (6) und die unteren Hebel (9) infolge der balligen Verzahnung selbständig ausrichten.

17. Kupplungsbetätigungsvorrichtung für ein Doppelkupplungsgetriebe nach einem der Ansprüche 1 bis 16, **dadurch gekennzeichnet, dass** jeweils eine Nasskupplung zu betätigen ist.

18. Kupplungsbetätigungsvorrichtung für ein Doppelkupplungsgetriebe nach einem der Ansprüche 1 bis 17, **dadurch gekennzeichnet, dass** die Drehachsen der beiden Drehhebel (3, 4) axial zu einer Kurbelwelle versetzt angeordnet sind.

## Claims

1. Clutch actuating device for a twin-clutch gearbox, having a first clutch actuator which actuates a first clutch and having a second clutch actuator which actuates a second clutch, with the clutch actuators acting on a first and a second release bearing (1, 2) of the associated clutch, and with in each case one mechanical force transmission path, which has a rotary lever (3, 4), being provided between the clutch actuators and the release bearings (1, 2), **characterized in that** each rotary lever (3, 4) has a crowned external toothing (5) which is in engagement with an internally-toothed holding sleeve (6) of the respective force transmission path.

2. Clutch actuating device for a twin-clutch gearbox according to Claim 1, **characterized in that** an introduction of torque when the rotary lever (3, 4) rotates takes place centrally on the external toothing (5) and internally-toothed holding sleeve (6).

3. Clutch actuating device for a twin-clutch gearbox according to Claim 1 or 2, **characterized in that** a base plate (11) is provided on which parts of the mechanical transmission path are pre-mounted.

4. Clutch actuating device for a twin-clutch gearbox according to one of Claims 1 to 3, **characterized in that** the two holding sleeves (6) are mounted or supported on a common base plate (11).

5. Clutch actuating device for a twin-clutch gearbox according to Claim 3 or 4, **characterized in that** the base plate (11) is mounted on a rear wall of a clutch bell (14).

6. Clutch actuating device for a twin-clutch gearbox according to Claim 3 or 4, **characterized in that** the base plate (11) is mounted on a gearbox housing (15) or in that the base plate (11) is mounted on a wall between the clutch bell (14) and gearbox housing (15).

7. Clutch actuating device for a twin-clutch gearbox according to one of Claims 3 to 6, **characterized in that** a restoring spring (16) for each rotary lever (3, 4) is provided on the base plate (11).

8. Clutch actuating device for a twin-clutch gearbox according to Claim 7, **characterized in that** the restoring spring (16) opens the clutch if the clutch actuator fails.

9. Clutch actuating device for a twin-clutch gearbox according to one of Claims 1 to 8, **characterized in that** the rotary lever (3, 4) is plugged into the holding sleeve (6) and **in that** lower levers (9) for actuating the release bearing (1, 2) are pressed onto the holding sleeve (6) at the outside.

10. Clutch actuating device for a twin-clutch gearbox according to Claim 9, **characterized in that** two levers (9) are provided per release bearing (1, 2).

11. Clutch actuating device for a twin-clutch gearbox according to Claim 10, **characterized in that** the two levers (9) are arranged on the rotary lever with equal axial spacing relative to the centre of the crowned external toothing (5) of the rotary lever (3, 4).

12. Clutch actuating device for a twin-clutch gearbox according to one of Claims 1 to 11, **characterized in that** each rotary lever (3, 4) is supported at two or three locations.

13. Clutch actuating device for a twin-clutch gearbox according to Claim 12, **characterized in that** at least in each case one support (7) is provided on the rotary lever (3, 4) at both sides of the crowned external toothing (5) on the rotary lever in the axial direction.

14. Clutch actuating device for a twin-clutch gearbox according to Claim 12, **characterized in that** the supports (7) of the rotary lever (3, 4) are provided in different components.

15. Clutch actuating device for a twin-clutch gearbox according to Claim 14, **characterized in that** the upper lever (8) is supported in a gearbox housing (15) and the lower lever (9) is supported in a wall (B).

16. Clutch actuating device for a twin-clutch gearbox according to Claim 14 or 15, **characterized in that** the holding sleeve (6) and the lower lever (9) are independently aligned on account of the crowned toothing.

17. Clutch actuating device for a twin-clutch gearbox according to one of Claims 1 to 16, **characterized in that** in each case one wet clutch is to be actuated.

18. Clutch actuating device for a twin-clutch gearbox according to one of Claims 1 to 17, **characterized in that** the rotational axes of the two rotary levers (3, 4) are arranged axially offset with respect to a crankshaft.

## Revendications

1. Dispositif d'actionnement d'embrayage pour une boîte de vitesses à double embrayage, comprenant un premier actionneur d'embrayage qui actionne un premier embrayage et un deuxième actionneur d'embrayage qui actionne un deuxième embrayage, les actionneurs d'embrayage agissant sur un premier et un deuxième palier de débrayage (1, 2) de l'embrayage associé, et entre les actionneurs d'embrayage et les paliers de débrayage (1, 2) étant à chaque fois prévue une section de transfert de force mécanique qui présente un levier rotatif (3, 4), **caractérisé en ce que** chaque levier rotatif (3, 4) présente une denture extérieure bombée (5) qui est en prise avec une douille de réception (6) à denture intérieure de la section de transfert de force respective.

2. Dispositif d'actionnement d'embrayage pour une boîte de vitesses à double embrayage selon la revendication 1, **caractérisé en ce qu'**une introduction de couple a lieu lors de la rotation du levier rotatif (3, 4) centralement au niveau de la denture extérieure (5) ou de la douille de réception (6) à denture intérieure.

3. Dispositif d'actionnement d'embrayage pour une boîte de vitesses à double embrayage selon la revendication 1 ou 2, **caractérisé en ce que** l'on prévoit une tôle de base (11) sur laquelle sont prémontées des parties de la section de transfert mécanique.

4. Dispositif d'actionnement d'embrayage pour une boîte de vitesses à double embrayage selon l'une quelconque des revendications 1 à 3, **caractérisé en ce que** les deux douilles de réception (6) sont montées ou supportées sur une tôle de base commune (11).

5. Dispositif d'actionnement d'embrayage pour une boîte de vitesses à double embrayage selon la revendication 3 ou 4, **caractérisé en ce que** la tôle de base (11) est montée sur une paroi arrière d'une cloche d'embrayage (14).

6. Dispositif d'actionnement d'embrayage pour une boîte de vitesses à double embrayage selon la revendication 3 ou 4, **caractérisé en ce que** la tôle de base (11) est montée sur un boîtier de boîte de vitesses (15) ou **en ce que** la tôle de base (11) est montée sur une paroi entre la cloche d'embrayage (14) et le boîtier de boîte de vitesses (15).

7. Dispositif d'actionnement d'embrayage pour une boîte de vitesses à double embrayage selon l'une quelconque des revendications 3 à 6, **caractérisé en ce que** l'on prévoit sur la tôle de base (11) un ressort de rappel (16) pour chaque levier rotatif (3, 4).

8. Dispositif d'actionnement d'embrayage pour une boîte de vitesses à double embrayage selon la revendication 7, **caractérisé en ce que** le ressort de rappel (16) ouvre l'embrayage lorsque l'actionneur d'embrayage est en panne.

9. Dispositif d'actionnement d'embrayage pour une boîte de vitesses à double embrayage selon l'une quelconque des revendications 1 à 8, **caractérisé en ce que** le levier rotatif (3, 4) est enfoncé dans la douille de réception (6) et **en ce que** des leviers inférieurs (9) sont pressés pour l'actionnement des paliers de débrayage (1, 2) à l'extérieur sur la douille de réception (6).

10. Dispositif d'actionnement d'embrayage pour une boîte de vitesses à double embrayage selon la revendication 9, **caractérisé en ce que** l'on prévoit deux leviers (9) par palier de débrayage (1, 2).

11. Dispositif d'actionnement d'embrayage pour une boîte de vitesses à double embrayage selon la revendication 10, **caractérisé en ce que** les deux leviers (9) sont disposés axialement sur le levier rotatif à égale distance par rapport au centre de la denture extérieure bombée (5) du levier rotatif (3, 4).

12. Dispositif d'actionnement pour une boîte de vitesses à double embrayage selon l'une quelconque des revendications 1 à 11, **caractérisé en ce que** chaque levier rotatif (3, 4) est monté en double ou en triple.

13. Dispositif d'actionnement d'embrayage pour une boîte de vitesses à double embrayage selon la revendication 12, **caractérisé en ce qu'**au moins à chaque fois un support sur palier (7) est prévu sur le levier rotatif de part et d'autre de la denture extérieure bombée (5) sur le levier rotatif (3, 4) dans la direction axiale.

14. Dispositif d'actionnement d'embrayage pour une boîte de vitesses à double embrayage selon la revendication 12, **caractérisé en ce que** les supports sur palier (7) du levier rotatif (3, 4) sont prévus dans des composants différents.

15. Dispositif d'actionnement d'embrayage pour une boîte de vitesses à double embrayage selon la revendication 14, **caractérisé en ce que** le levier supérieur (8) est monté dans un boîtier de boîte de vitesses (15) et le levier inférieur (9) est monté dans une paroi (B).

16. Dispositif d'actionnement d'embrayage pour une boîte de vitesses à double embrayage selon la revendication 14 ou 15, **caractérisé en ce que** la douille de réception (6) et le levier inférieur (9) s'alignent automatiquement du fait de la denture bombée.

17. Dispositif d'actionnement d'embrayage pour une boîte de vitesses à double embrayage selon l'une quelconque des revendications 1 à 16, **caractérisé en ce qu'**un embrayage humide doit à chaque fois être actionné.

18. Dispositif d'actionnement d'embrayage pour une boîte de vitesses à double embrayage selon l'une quelconque des revendications 1 à 17, **caractérisé en ce que** les axes de rotation des deux leviers rotatifs (3, 4) sont disposés de manière décalée axialement par rapport à un vilebrequin.
